# EUROPÄISCHE PATENTSCHRIFT

(11) **EP 2 122 147 B1**
(45) Veröffentlichungstag und Bekanntmachung des Hinweises auf die Patenterteilung: **31.10.2012**
(21) Anmeldenummer: 08707215.3
(22) Anmeldetag: 23.01.2008
(51) Int. Cl.: F02G 5/02, F01K 23/06

(54) **VORRICHTUNG ZUR GEWINNUNG ELEKTRISCHER ENERGIE AUS DER ABGASWÄRME EINER VERBRENNUNGSMASCHINE EINES KRAFTFAHRZEUGES, UND VERFAHREN ZUR GEWINNUNG ELEKTRISCHER ENERGIE AUS DER ABGASWÄRME EINER VERBRENNUNGSMASCHINE EINES KRAFTFAHRZEUGES**
DEVICE FOR RECOVERING ELECTRIC ENERGY FROM THE EXHAUST HEAT OF AN INTERNAL COMBUSTION ENGINE IN A MOTOR VEHICLE AND METHOD FOR RECOVERING ELECTRIC ENERGY FROM THE EXHAUST HEAT OF AN INTERNAL COMBUSTION ENGINE IN A MOTOR VEHICLE
DISPOSITIF DE PRODUCTION D'ÉNERGIE ÉLECTRIQUE À PARTIR DE LA CHALEUR DES GAZ D'ÉCHAPPEMENT D'UN MOTEUR À COMBUSTION INTERNE D'UN VÉHICULE À MOTEUR

(30) Priorität: 25.01.2007 DE 102007003801
(43) Veröffentlichungstag der Anmeldung: 25.11.2009
(73) Patentinhaber: Compact Dynamics GmbH, 82319 Starnberg (DE)
(72) Erfinder: GRÜNDL, Andreas, 82319 Starnberg (DE); HOFFMANN, Bernhard, 82319 Starnberg (DE)
(74) Vertreter: Schmidt, Steffen
(86) Internationale Anmeldenummer: PCT/EP2008/000502
(87) Internationale Veröffentlichungsnummer: WO 2008/089972

(56) Entgegenhaltungen:
- DE-A1- 3 835 048
- JP-A- 2005 345 084
- JP-A- 2006 052 718
- US-A- 4 586 338

## Beschreibung

Die Erfindung betrifft eine Vorrichtung zur Gewinnung elektrischer Energie aus der Abgaswärme eines Kraftfahrzeuges. Weiterhin betrifft die Erfindung ein Verfahren zur Gewinnung elektrischer Energie aus der Abgaswärme eines Kraftfahrzeuge, und die Verwendung von aus der Abgaswärme eines Kraftfahrzeuges gewonnener elektrischer Energie zum Betreiben eines Kraftfahrzeuges.

Aus der DE 33 26 992 C1 ist ein Antriebsaggregat für Kraftfahrzeuge bekannt, das mit einer Brennkraftmaschine und einer Abwärmeturbineneinheit ausgestattet ist. Die Abwärmeturbineneinheit besteht aus einer von den Abgasen der Brennkraftmaschine beaufschlagten Gasturbine und einer Dampfturbine. In der Abwärmeturbineneinheit expandiert ein durch Abgaswärme aus einem verdampfbaren flüssigen Medium erzeugter Dampf unter Arbeitsabgabe. Die Abwärmeturbineneinheit hat einen rotierenden, als Hohlkörper ausgebildeten Zylinder, der an seiner Außenseite den Abgasen ausgesetzte Schaufeln trägt. Verdampfbares flüssiges Medium kann in das Innere des Zylinders zugeführt werden. Dort erzeugter Dampf kann aus dem Zylinder in die nachgeschaltete Dampfturbine und ein Gehäuse gelangen, in dem der Zylinder und die Dampfturbine gelagert sind.

Aus der DE 29 41 240 A1 ist eine Brennkraftmaschine mit wenigstens einem maschinenfesten Zylinder und einem in dem Zylinder verschiebbaren, auf eine Kurbelwelle arbeitenden Kolben bekannt. Der Kolben begrenzt zusammen mit dem Zylinder einen Brennraum. Der Brennraum hat ein Einlassventil und ein Auslassventil. Durch das Auslassventil kann Abgas zu einer Turbine geleitet werden, die mit einem Stromgenerator gekoppelt ist.

Aus der EP 0 636 779 B1 ist eine Wärmekraftmaschine und ein Verfahren zu deren Betrieb bekannt. Die Wärmekraftmaschine dient zur Erzeugung von thermischer und mechanischer Energie. In dem System wird das Kühlmittel von der Maschine in einen Verdampfungsraum geführt, in dem durch Druckminderung oder durch Vergrößerung des Betrags an thermischer Energie innerhalb dieses Raumes ein Teil des Kühlmittels in Dampf transformiert wird. Der aus dem Kühlmittel erzeugte Dampf wird mittels eines heißen Fluidstroms überhitzt. Der Kühlmitteldampf wird innerhalb des Energienutzsystems für den Energietransport oder als Medium zur Energierückgewinnung verwendet. Der Druck des Kühlmittels wird in der Maschine höher aufrecht erhalten als der Druck in dem Verdampfungsraum, so dass das Kühlmittel in der Maschine flüssig ist. Der in dem Verdampfungsraum zum Verdampfen des Kühlmittels erforderliche Energiebetrag entspricht im wesentlichen dem Betrag der thermischen Energie, die auf das Kühlmittel von der Wärmekraftmaschine übertragen wird, während letztere gekühlt wird.

Eine ährlische Vorrichtung ist aus JP 20005 34 5084 bekannt.

Damit derartige Vorrichtungen einen sinnvollen Beitrag zur Verringerung des Kraftstoffverbrauchs in Kraftfahrzeugen liefern können, müssen sie eine Reihe von Anforderungen erfüllen. So ist durch einen zweckmäßigen Aufbau die Betriebssicherheit zu gewährleisten, ein hoher Wirkungsgrad und eine kostengünstige Großserieneignung zu erreichen.

Es ist daher die Aufgabe der vorliegenden Erfindung, eine Vorrichtung der eingangs bezeichneten Art bereitzustellen, welche bei geringen Kosten, kompakter Bauform und einfachem Aufbau und zuverlässigem Betrieb einen gegenüber dem Stand der Technik verbesserten Energie-Rekuperationsgrad ermöglicht.

Diese Aufgabe wird gelöst durch eine Vorrichtung zur Gewinnung elektrischer Energie aus der Abgaswärme einer Verbrennungsmaschine eines Kraftfahrzeuges, mit einem Wärmetauscher, der primärseitig von Abgas der Verbrennungsmaschine zu durchströmen ist, und der sekundärseitig von Wärmetauscherfluid zu durchströmen ist, das im Betrieb der Verbrennungsmaschine in dem Wärmetauscher auf ein erstes, hohes Temperatur- und/oder Druckniveau zu bringen ist. Die Vorrichtung hat wenigstens eine, einen Eintritt und einen Austritt aufweisende Lavaldüse, deren Eintritt mit einem sekundärseitigen Auslass des Wärmetauschers zu verbinden ist, deren Austritt auf wenigstens eine Schaufel wenigstens eines Schaufelrades einer Gleichdruckturbine gerichtet ist, und die so dimensioniert ist, dass sie die Gleichdruckturbine mit Dampf beschickt, der ein niedrigeres, zweites Temperatur- und/oder Druckniveau als das erste, hohe Temperatur- und/oder Druckniveau, und eine hohe Strömungsgeschwindigkeit hat. Die Vorrichtung hat des Weiteren einen elektrischen Generator, der einen mit der Gleichdruckturbine gekoppelten Rotor, der von ihr in Rotation zu versetzen ist, und einen Stator mit wenigstens einer Statorwicklung, an der elektrische Leistung abzunehmen ist. Weiterhin hat die Vorrichtung einen Kondensationskühler, der dazu eingerichtet ist, Dampf, der an der Gleichdruckturbine Arbeit verrichtet hat, zu verflüssigen, wobei aus diesem Dampf durch Kondensation gewonnene Flüssigkeit in einen sekundärseitigen Einlass des ersten Wärmetauschers einzuspeisen ist.

Erfindungsgemäß ist der Eintritt der Lavaldüse mit dem sekundärseitigen Auslass des Wärmetauschers unter Zwischenschaltung eines druck- und/oder temperaturabhängig schaltenden Steuerventils zu verbinden, wobei unterhalb eines vorbestimmten ersten Druck- und/ oder Temperaturniveau sich das Steuerventil in seiner Schließstellung befindet. Dies stellt sicher, dass die Vorrichtung erst bei Erreichen des durch das vorbestimmte erste Druck- und/ oder Temperaturniveau definierte Betriebswerte anläuft.

Die mit der erfindungsgemäßen Vorrichtung gewonnene Energie kann in einem Hybridfahrzeug, bei dem im oder am Antriebsstrang mit einer Fossil-Brennkraftmaschine oder einer Wasserstoff-Brennkraftmaschine ein oder mehrere elektrische Maschinen angeordnet sind (zum Beispiel regenerativen Bremsung oder zur elektrischen Unterstützung/ oder zum zeitweiligen Ersatz der Brennkraftmaschine) zur Steigerung der Antriebsleistung des Fahrzeuges eingesetzt werden. Alternativ ist auch der Einsatz als Hilfstriebwerk (engl. auxiliary power unit, APU) wie es derzeit hauptsächlich in Flugzeugen verwendet wird, denkbar. Die APU ist nicht für den Antrieb des Fahrzeuges gedacht. Sie liefert elektrische Energie zum autarken Betrieb der Fahrzeugausrüstung, ohne dass der Hauptantrieb dafür laufen müsste. Andere Systeme am Fahrzeug, die durch die APU betrieben werden können, sind Bordelekrik/-elektronik, Klimaanlage, etc. In diesem Fall wäre der Wärmetauscher mit einem Brenner (z. B. von einer Standheizung) betreiben um einen kompaktes Aggregat für Standklimatisierung, etc. zu erhalten.

Die Verbrennungsmaschine des Kraftfahrzeuges kann eine interne Brennkraftmaschine, in Form einer Dieselmaschine, einer Otto-Maschine, oder dergl. sein. Dabei ist der Wärmetauscher derart mit der Verbrennungsmaschine des Kraftfahrzeuges zu verbinden und von dem Wärmetauscherfluid zu durchströmen, dass das Abgas des Verbrennungsmotors und das Wärmetauscherfluid den Wärmetauscher im Gegenstrom passieren.

Das druck- und/oder temperaturabhängig schaltende Steuerventil wechselt bei Erreichen eines Temperaturniveau des Wärmetauscherfluids von etwa 450 °C bis 700 °C bzw. eines Druckniveau etwa 45 bar bis etwa 70 bar von seiner Schließstellung in seine Offenstellung. Dabei gelten auch alle Zwischenwerte zwischen diesen angegebenen Werten sowie beliebige Kombinationen von solchen Druck- und Temperaturwerten als im Sinne der Erfindung offenbart.

Die Lavaldüse kann erfindungsgemäß einen im Wesentlichen kreisrunden Querschnitt halben, wobei der Austritt der Lavaldüse einen Erweiterungswinkel hat, der so gewählt ist, dass der austretende Dampf eine vom Austritt der Lavaldüse ablösungsfreie Strömung hat. Es sind jedoch auch andere, zum Beispiel elliptische Querschnitte für die Lavaldüse möglich.

Bevorzugt liegt der Erweiterungswinkel etwa unter 20°, vorzugsweise unter etwa 10°. Außerdem kann erfindungsgemäß die Lavaldüse so dimensioniert sein, dass der in ihren Eintritt eingespeiste Dampf am Austritt der Lavaldüse überhitzter Dampf (Trockendampf) ist.

Die Gleichdruckturbine kann erfindungsgemäß ein Schaufelrad aufweisen, das zur Erzeugung eines auf den Rotor des elektrischen Generator wirkenden Drehmomentes dem Dampf Energie entzieht, wobei eine Druckdifferenz zwischen dem Eintritt der Lavaldüse und einem Auslass der Gleichdruckturbine praktisch ausschließlich in der Lavaldüse abzubauen ist, während der Druck im Schaufelrad praktisch konstant bleibt.

Erfindungsgemäß ist die Gleichdruckturbine eine vorzugsweise tangential durchströmte Peltonturbine.

Dabei kann die Lavaldüse zur Regelung der in der Vorrichtung erzeugten elektrischen Nutzleistung durch Verändern des auf das Schaufelrad der Gleichdruckturbine gerichteten Volumenstroms einen mit einer Stelleinrichtung verstellbaren Düsenquerschnitt haben.

Entlang des Umfangs des Schaufelrad der Gleichdruckturbine können eine oder mehrere Lavaldüsen angeordnet sein um Dampf auf die Schaufeln der Gleichdruckturbine zu richten. Für diese Mehrzahl von Lavaldüsen gelten die vorstehend erläuterten Regeln und Maßgaben zu ihrer Dimensionierung. In dieser Ausführungsform ist es möglich, zur Regelung der elektrischen Nutzleistung einzelne oder mehrere der Lavaldüsen selektiv geschaltet mit Dampf aus dem Wärmetauscher zu speisen.

Die Gleichdruckturbine ist vorzugsweise so angeordnet, dass die ihre Schaufeln frei von Unterwasser sind. Im Kontext der Erfindung ist dafür Sorge zu tragen, dass der auf die Schaufeln gerichtete Dampf-Volumenstrom am Schaufelrad der Gleichdruckturbine nicht kondensiert.

Vielmehr soll erfindungsgemäß der Dampf an dem Kondensationskühler sich niederschlagen. Dazu ist als Kondensationskühler ein als in Rotation zu versetzender Körper vorgesehen. Dieser in Rotation zu versetzende Körper ist in einem Raum angeordnet, in den der Dampf gelangt, nachdem dieser an der Gleichdruckturbine Arbeit verrichtet hat. Mit anderen Worten bleibt erfindungsgemäß der an der Gleichdruckturbine eingesetzte Dampf auch nach dort verrichteter Arbeit in der Dampfphase, bis er in den Wirkungskreis des Kondensationskühlers gelangt. Erst dort kondensiert der Dampf als Niederschlag und kann dem Kühlkreislauf wieder zugeführt werden. Ein wesentliches Merkmal des Kondensationskühlers ist, dass der in Rotation zu versetzen ist. Dazu kann ein separater Motor vorgesehen sein; es ist jedoch auch möglich, die Rotation - gegebenenfalls auch in ihrer Drehzahl untersetzt - von dem Rotor der Gleichdruckturbine abzuleiten.

Der Kondensationskühler kann mehrere miteinander in Strömungsverbindung stehende Kammern aufweisen, deren Wände auf einer Seite von einem Kühlmedium zu kühlen sind, und auf der anderen Seite als Kondensationsfläche für den Dampf aus der Gleichdruckturbine dienen. Dabei kann entweder der Dampf an der Außenseite der Kammern niederschlagen, und die Innenseite der Kammerwände gekühlt sein, oder der Dampf kann an der Innenseite der Kammern niederschlagen, und die Außenseite der Kammerwände ist gekühlt.

Vorzugsweise sind die Kammern des Kondensationskühlers mit einer Drehzahl in Rotation zu versetzen die so bemessen ist, dass die dabei auftretende Zentrifugalkraft an der Kondensationsfläche kondensierenden Niederschlag radial nach außen an den Rand der Kammern fördert und von dort radial abschleudert. Auf diese Weise kann kontinuierlich der Dampf an der Wand der Kammern niederschlagen und wird von dort abtransportiert. Dies erhöht die Kühlleistung gegenüber herkömmlichen Kondensationskühlern, auch solchen mit Abstreifern, signifikant.

Zur Kühlung der Kammerwände des Kondensationskühlers wird ein Kühlmedium, zum Beispiel Wasser an den Kammerwänden entlang gefördert. Die thermische Energie dieses Kühlmediums wird über einen weiteren Wärmetauscher aus der Vorrichtung herausgeführt. Sie kann zum Beispiel über den bereits vorhandenen Kühlkreislauf des Kraftfahrzeuges oder über einen separaten, mit Fahrluft oder mit Zwangsluft gekühlten Kühler an die Umgebung abgegeben werden.

Weiterhin kann eine Senke vorgesehen sein, um vom Rand der Kammern radial abgeschleuderten Niederschlag als Flüssigkeit zu sammeln damit diese als Wärmetauscherfluid zum Einspeisen in den sekundärseitigen Einlass des Wärmetauschers zur Verfügung steht.

In diese Senke kann erfindungsgemäß ein Ansaugstutzen einer Förderpumpe ragen, welche die Flüssigkeit zum sekundärseitigen Einlass des Wärmetauschers fördert.

Der elektrische Generator kann eine permanenterregte Gleichstrommaschine, vorzugsweise mit elektronischer Kommutierung sein. Es sind jedoch auch andere, vorzugsweise schnell laufende Typen elektrischer Generatoren, zum Beispiel eine Reluktanzmaschine in der erfindungsgemäßen Vorrichtung einsetzbar.

Ausgangsanschlüsse von den Statorwicklungen des elektrischen Generators sind erfindungsgemäß mit wenigstens einem elektrischen Energiespeicher (Akkumulator) und/ oder wenigstens einem Elektromotor im oder am Antriebsstrang des Kraftfahrzeuges zu verbinden.

Erfindungsgemäß ist die Vorrichtung in einer druck- und temperaturfesten Ummantelung aufgenommen.

Der rotierende Kondensationskühler, bei dem an Kühlwänden kondensierendes Medium durch Zentrifugalkraft von den Kühlwänden abgeschleudert wird, ist eine eigenständige Erfindung, die auch in anderen Bereichen mit Vorteil einsetzbar ist.

Auch wenn die erfindungsgemäße Vorrichtung vorstehend im Zusammenhang mit einer Energie-Rekuperation in einem Kraftfahrzeug beschrieben ist, versteht es sich, dass die Erfindung auch in stationären Anwendungen (zum Beispiel stationäres Stromerzeugungsaggregat) mit Vorteil einsetzbar ist.

Weiterhin lehrt die Erfindung ein Verfahren zur Gewinnung elektrischer Energie aus der Abgaswärme einer Verbrennungsmaschine eines Kraftfahrzeuges, mit den Schritten:
- Bereitstellen eines Wärmetauschers,
- Einspeisen von Abgas des Verbrennungsmotors in die Primärseite des Wärmetauschers,
- Einspeisen von Wärmetauscherfiuid in die Sekundärseite des Wärmetauschers um im Betrieb des Verbrennungsmotors das Wärmetauscherfluid in dem Wärmetauscher auf ein erstes, hohes Temperatur- und/oder Druckniveau zu bringen,
- Zuführen des auf dem ersten, hohen Temperatur- und/oder Druckniveau befindlichen Wärmetauscherfluid zu wenigstens einer Lavaldüse, die einen Eintritt für das Wärmetauscherfluid und einen Austritt hat, der auf Schaufelräder einer Gleichdruckturbine gerichtet ist,
- wobei die Lavaldüse so dimensioniert ist, dass sie die Gleichdruckturbine mit Dampf beschickt, der ein niedrigeres, zweites Temperatur- und/oder Druckniveau als das erste, hohe Temperatur- und/oder Druckniveau, und eine hohe Strömungsgeschwindigkeit hat,
- um einen mit der Gleichdruckturbine gekoppelten Rotor eines elektrischen Generators in Rotation zu versetzen, und um von einem Stator des elektrischen Generators mit wenigstens einer Statorwicklung elektrische Leistung abzunehmen,
- Kondensieren des Dampfes, der an der Gleichdruckturbine Arbeit verrichtet hat mit einem Kondensationskühler, und
- sekundärseitiges Einspeisen der durch Kondensation dieses Dampfes gewonnenen Flüssigkeit in den Wärmetauscher als Wärmetauscherfluid.

Als Verbrennungsmaschine des Kraftfahrzeuges wird in diesem Verfahren eine interne Brennkraftmaschine in Form einer Dieselmaschine, einer Otto-Maschine, oder dergl. verwendet.

Das Abgas des Verbrennungsmotors und das Wärmetauscherfluid passieren den Wärmetauscher erfindungsgemäß im Gegenstrom.

Der Eintritt der Lavaldüse wird erfindungsgemäß erst dann mit dem sekundärseitigen Auslass des Wärmetauschers in Strömungsverbindung gesetzt, wenn sich das Wärmetauscherfluid oberhalb eines vorbestimmten ersten Druck- und/oder Temperaturniveau befindet. Vorzugsweise wird der Eintritt der Lavaldüse erst dann mit dem sekundärseitigen Auslass des Wärmetauschers in Strömungsverbindung gesetzt, wenn das Wärmetauscherfluid ein Temperaturniveau von etwa 450 °C bis 700 °C bzw. ein Druckniveau etwa 45 bar bis etwa 70 bar erreicht hat. Hierbei wird besonders vorzugsweise ein Druckniveau von etwa 60 bar bzw. ein Temperaturniveau von etwa 550 °C bar eingesezt. Es sei verstanden, dass auch samtliche Zwischenwerte zu den vorgenannten Wertebereichen als zur Erfindung gehörig offenbart sind.

Am Austritt der Lavaldüse wird vorzugsweise Dampf mit einer im Wesentlichen ablösungsfreien Strömung bereitgestellt. Dazu wird erfindungsgemäß am Austritt der Lavaldüse überhitzter Dampf bereitgestellt, der vorzugsweise etwa 2 - 7 bar Druck, etwa 130 - 250 °C Temperatur und etwa 900 - 1300 m/s Strömungsgeschwindigkeit hat. Es sei verstanden, dass auch sämtliche Zwischenwerte zu den vorgenannten Wertebereichen als zur Erfindung gehörig offenbart sind. Besonders bevorzugt sind etwa 3 bar Druck, etwa 145 °C Temperatur und etwa 1100 m/s Strömungsgeschwindigkeit. Aufgrund von (Fluid-)Reibungsvertusten und Strömungsverlusten kann sich jedoch auch eine Temperatur von ca. 200°C einstellen.

Zur Erzeugung eines auf den Rotor des elektrischen Generators wirkenden Drehmomentes entzieht erfindungsgemäß ein Schaufelrad der Gleichdruckturbine dem Dampf Energie, wobei eine Druckdifferenz zwischen dem Eintritt der Lavaldüse und einem Auslass der Gleichdruckturbine praktisch ausschließlich in der Lavaldüse abgebaut wird, während der Druck im Schaufelrad praktisch konstant bleibt.

Der von der Lavaldüse bereitgestellte Dampf erfindungsgemäß durchströmt die Gleichdruckturbine vorzugsweise tangential.

Zur Regelung einer von der Vorrichtung abgegebenen elektrischen Nutzleistung wird erfindungsgemäß der Volumenstrom durch den Düsenquerschnitt der Lavaldüse mit einer Stelleinrichtung verstellt. Alternativ ist erfindungsgemäß auch die Regelung auch über die Anzahl der mit Dampf beschickten Lavaldüsen bzw. durch eine Regelung des Druckniveaus der Speisepumpe möglich des Wärmetauschers möglich.

Nachdem der Dampf an der Gleichdruckturbine Arbeit verrichtet hat, schlägt dieser an dem Kondensationskühler als Flüssigkeit nieder. Dabei wird der Kondensationskühler erfindungsgemäß mit einer Drehzahl in Rotation versetzt, so dass die dabei auftretende Zentrifugalkraft an dem Kondensationskühler kondensierenden Niederschlag radial nach außen an den Rand des Kondensationskühlers fördert und von dort radial abschleudert.

In dem Kondensationskühler werden erfindungsgemäß Wände mehrerer miteinander in Strömungsverbindung stehender Kammern auf einer Seite von einem Kühlmedium gekühlt, und dienen auf der anderen Seite als Kondensationsfläche für den Dampf aus der Gleichdruckturbine. Dabei werden die Umgebungsverhältnisse (Druck, Temperatur, Temperatur an den Wänden des Kondensationskühler, etc.) erfindungsgemäß so eingestellt, dass der sich Dampf bei einem Taupunkt von etwa 120 °C - 140 °C, bevorzugt ca. 130 °C, an den Wänden des Kondensationskühlers niederschlägt.

In einer Senke wird erfindungsgemäß vom Rand der Kammern des Kondensationskühlers radial abgeschleuderter Niederschlag als Flüssigkeit gesammelt, damit diese Flüssigkeit als Wärmetauscherfluid zum Einspeisen in den sekundärseitigen Einlass des Wärmetauschers zur Verfügung steht.

Die Kammerwände des Kondensationskühlers werden mit einem Kühlmedium unter den Taupunkt des aus der Gleichdruckturbine austretenden Dampfes gekühlt und die thermische Energie dieses Kühlmediums wird über einen weiteren Wärmetauscher aus der Vorrichtung herausgeführt.

Aus der Senke wird mittels einer Förderpumpe, zum Beispiel einer Zahnradpumpe oder einem anderen Typ einer Verdrängerpumpe, die Flüssigkeit als Wärmetauscherfluid zum sekundärseitigen Einlass des Wärmetauschers gefördert.

Zur Erzeugung elektrischer Energie wird als elektrischer Generator eine Reluktanzmaschine oder eine permanenterregte Gleichstrommaschine, vorzugsweise mit elektronischer Kommutierung verwendet. Dabei ist erfindungsgemäß die Gleichstrommaschine in der Lage, relativ hohe Drehzahlen (ca. 80.000 - ca. 160.000 Umdrehungen pro Minute, vorzugsweise ca. 120.000 Umdrehungen pro Minute) zu verarbeiten, da die Gleichdruckturbine von der Lavaldüse mit Dampf mit sehr hoher Geschwindigkeit (mehrfache Schallgeschwindigkeit) angeströmt wird. In der Gleichdruckturbine wird die Energie des Dampfes dann optimal ausgenutzt, wenn sich ihre Schaufeln halb so schnell bewegen wie der Dampf aus der Lavaldüse ausströmt. Mithin hat das Schaufelrad der Gleichdruckturbine eine Umfangsgeschwindigkeit von etwa der halben Ausströmgeschwindigkeit des Dampfes aus der Lavaldüse.

Weitere Einzelheiten, Abwandlungen und Eigenschaften der Erfindung werden im Folgenden unter Bezugnahme auf die Figuren erläutert. Dabei zeigen:
- Figur 1: eine schematische Übersichtsdarstellung einer erfindungsgemäßen Vorrichtung zur Gewinnung elektrischer Energie aus der Abgaswärme einer Verbrennungsmaschine eines Kraftfahrzeuges;
- Figur 2a: eine Lavaldüse in einer schematischen Längsschnittdarstellung; und
- Figur 2b: die Lavaldüse aus Figur 2a in einer schematischen Vorderansicht.

### Detaillierte Beschreibung bevorzugter Ausführungsformen der Efindung

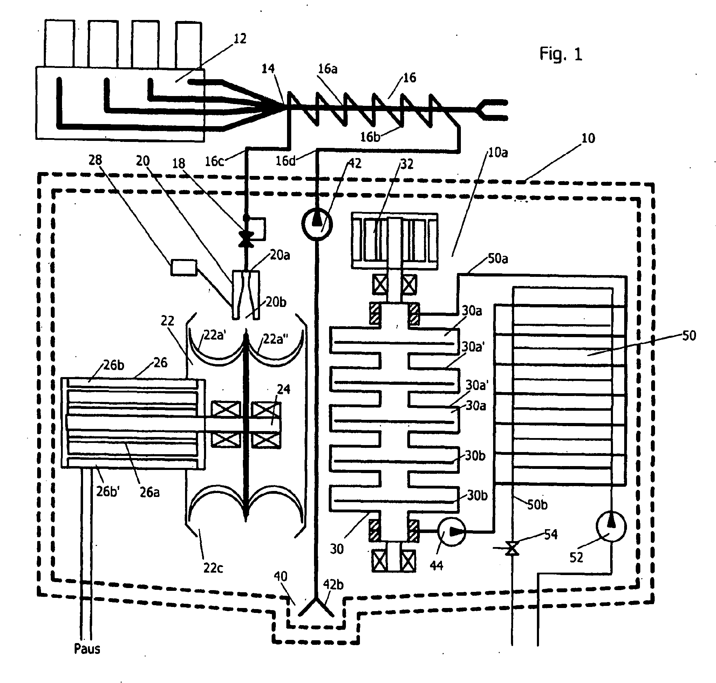

Figur 1 zeigt eine Vorrichtung zur Gewinnung elektrischer Energie aus der Abgaswärme einer Verbrennungsmaschine 12 eines - nicht weiter veranschaulichten Kraftfahrzeuges. Die Vorrichtung ist in einer druck- und temperaturfesten Ummantelung 10 aufgenommen. Die Verbrennungsmaschine 12 kann dabei eine Dieselmaschine, eine Otto-Maschine, oder dergl. sein. An einer (gemeinsamen) Abgasleitung 14 der Auspuffanlage des Verbrennungsmaschine 12 ist ein Wärmetauscher 16 angeordnet. Der Wärmetauscher 16 hat damit eine primärseitige Leitung 16a, die im Betrieb der Verbrennungsmaschine 12 von Abgas der Verbrennungsmaschine 12 durchströmt wird. In der Abgasleitung 14 der Auspuffanlage können in dem Abschnitt, der die primärseitige Leitung 16a des Wärmetauscher 16 bildet, zur Verbesserung des Wärmeübergangs - nicht weiter veranschaulichte - (Längs-)Rippen vorgesehen sein, die an der Innenwand der Abgasleitung 14 angeformt sind.

Der Wärmetauscher 16 hat eine sekundärseitige Leitung 16b, die um die primärseitige Leitung 16a des Wärmetauschers 16 herumgewunden ist, also im temperaturleitenden Kontakt mit der primärseitigen Leitung 16a des Wärmetauschers 16 steht. Im Betrieb der Vorrichtung wird die sekundärseitige Leitung 16b von Wärmetauscherfluid, zum Beispiel Wasser, durchströmt. Dazu ist der Wärmetauscher 16 derart mit der Verbrennungsmaschine 12 des Kraftfahrzeuges zu verbinden bzw. von dem Wärmetauscherfluid zu durchströmen, dass das Abgas der Verbrennungsmaschine und das Wärmetauscherfluid den Wärmetauscher 16 im Gegenstrom passieren. Das Wärmetauscherfluid wird im Betrieb der Verbrennungsmaschine 12 in dem Wärmetauscher 16 auf ein hohes Temperatur- und Druckniveau von etwa 450 °C bis 700 °C bzw. etwa 45 bar bis etwa 70 bar gebracht. Um dieses Temperatur- und Druckniveau möglichst schnell zu erreichen hat der Wärmetauscher 16 an seinem sekundärseitigen Auslass 16c ein druck- bzw. temperaturabhängig schaltendes Steuerventil 18 nachgeschaltet, das sich unterhalb des vorbestimmten ersten Druck- bzw. Temperaturniveau in seiner Schließstellung befindet. Erst bei Erreichen eines Druckniveau des Wärmetauscherfluids von etwa 450 °C bis 700 °C bzw. eines Temperaturniveau etwa 45 bar bis etwa 70 bar wechselt das Steuerventil 18 von seiner Schließstellung in seine Offenstellung. Damit wird ein Strömungspfad für das Wärmetauscherfluid, welches sich bei dem vorstehend genannten hohen Druck- bzw. Temperaturniveau als überhitzter Dampf vorliegt, einem Eintritt 20a einer Lavaldüse 20 zugeführt.

Die Lavaldüse 20 hat einen Austritt 20b, der auf Schaufeln 22a', 22a" einer Gleichdruckturbine 22 gerichtet ist. Dabei ist die Lavaldüse 20 so gestaltet, dass sie die Gleichdruckturbine 22 mit am Austritt 20b der Lavaldüse 20 austretendem Dampf beschickt, der ein niedrigeres, zweites Druckniveau von etwa 2 - 7 bar bzw. etwa ein niedrigeres, zweites Temperaturniveau von etwa 150 - 200 °C, und etwa 900 - 1300 m/s Stömungsgeschwindigkeit hat.

Die Lavaldüse 20 ist so dimensioniert, dass der in ihren Eintritt 20a eingespeiste Dampf auch am Austritt 20b der Lavaldüse 20 überhitzter Dampf ist.

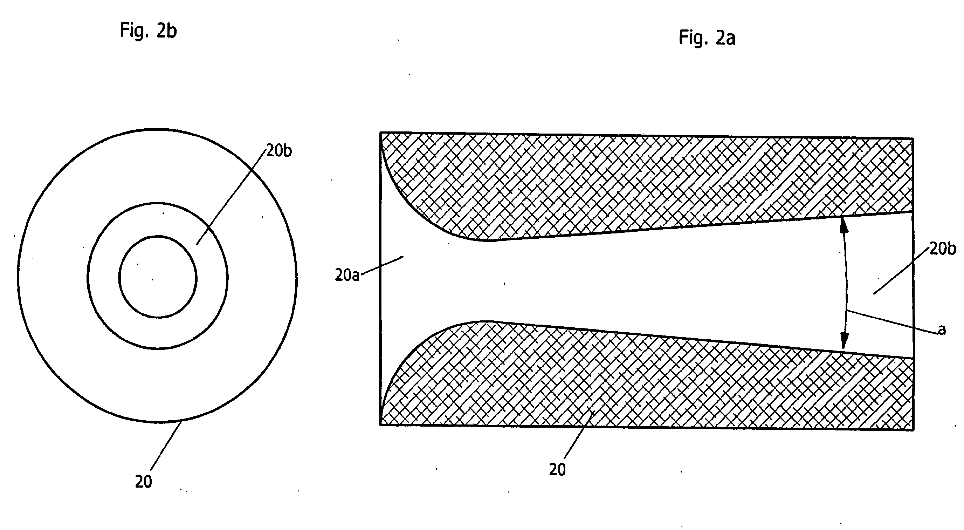

Die Lavaldüse 20 (siehe auch Fig. 2a, 2b) hat einen im Wesentlichen kreisrunden Querschnitt, wobei der Austritt 20b der Lavaldüse 20 einen Erweiterungswinkel a hat, der so gewählt ist, dass der austretende Dampf eine ablösungsfreie Strömung hat. Dies ist - abhängig von dem gewählten Wärmetauscherfluid - bei einem Erweiterungswinkel a von unter etwa 20°, bei Wasser vorzugsweise unter etwa 10° der Fall.

Die Gleichdruckturbine 22 ist als tangential durchströmte Peltonturbine ausgestaltet, die ein Schaufelrad 22a mit nebeneinander angeordneten Schaufeln 22a', 22a" aufweist. Das Schaufelrad 22a, wird durch den auf seine Schaufeln 22a', 22a" gerichteten Dampf in Rotation gesetzt, wobei ein Drehmoment in einer Turbinenwelle 24 hervorgerufen wird. Die Turbinenwelle 24 ist mit einem Rotor 26a eines elektrischen Generators 26 drehfest gekoppelt. Durch das in Drehung versetzen wird dem Dampf seine kinetische Energie praktisch vollständig entzogen, wenn sich die Schaufeln 22a', 22a" halb so schnell bewegen wie der Dampf aus der Lavaldüse 20 ausströmt. Dabei ist eine Druckdifferenz zwischen dem Eintritt 20a der Lavaldüse 20 und einem Auslass 22c der Gleichdruckturbine 22 praktisch ausschließlich in der Lavaldüse 20 abzubauen ist während der Druck im Schaufelrad 22a praktisch konstant bleibt. Die Gleichdruckturbine 22 ist im Innern der Ummantelung 10 so angeordnet, dass die ihre Schaufeln 22a', 22a" frei von Unterwasser sind.

Der elektrische Generator 26 hat einen den Rotor 26a umgebenden Stator 26b mit mehreren Statorwicklungen 26b". Wenn die Gleichdruckturbine 22 den mit ihr gekoppelten Rotor 26a des elektrischen Generator 26 in Rotation versetzt, kann an dessen Statorwicklung 26b' elektrische Leistung Pₐᵤₛ abgegriffen werden.

Die Lavaldüse 20 kann zur Regelung der an der Statorwicklung 26b' abgegriffenen elektrische Nutzleistung Pₐᵤₛ durch Verändern des Volumenstroms einen mit einer lediglich angedeuteten Stelleinrichtung 28 verstellbaren Düsenquerschnitt haben.

Die Vorrichtung hat weiterhin einen Kondensationskühler 30 (siehe auch Fig. 3), der dazu eingerichtet ist, Dampf, der an der Gleichdruckturbine 22 Arbeit verrichtet hat, zu verflüssigen.

Dazu ist der Kondensationskühler 30 als durch einen elektrischen Motor 32 in Rotation zu versetzender Körper ausgebildet. Dieser Körper 30 ist in einem Raum 10a oder Bereich im Innern der Ummantelung 10 angeordnet, in den der Dampf gelangt, nachdem dieser an der Gleichdruckturbine 22 Arbeit verrichtet hat. Genauer gesagt hat der Kondensationskühler 30 mehrere miteinander in Strömungsverbindung stehende kreisscheibenförmige Kammern 30a, deren Wände 30a' auf einer Seite (in Fig. 1 auf der Innenseite) von einem Kühlmedium zu kühlen sind, und auf der anderen Seite (in Fig. 1 auf der Außenseite) als Kondensationsfläche für den Dampf aus der Gleichdruckturbine 22 dienen. Die kreisscheibenförmigen Kammern 30a sind im Bereich ihrer Mittellängsachsen axial fluchtend auf- oder aneinander gestapelt und druckdicht miteinander verbunden. Außerdem sind im Innern der Kammern 30a Umlenkbleche 30b für das Kühlmedium, zum Beispiel Wasser oder Kohlenwasserstoffe (Alkohol, Öl, oder dergl.) vorgesehen. Anstelle der kreisscheibenförmige Kammern 30a sind auch andere Gestalten der Kammern möglich. Die Kammern 30a des Kondensationskühlers 30 sind durch den elektrischen Motor 32 mit einer Drehzahl in Rotation zu versetzen, dass die dabei auftretende Zentrifugalkraft an der Kondensationsfläche kondensierenden Niederschlag (des Dampfes) radial nach außen an den Rand der Kammern 30a fördert und von dort radial abschleudert.

Am Grund im Innern der Ummantelung 10 ist eine Senke 40 vorgesehen, um vom Rand der Kammern 30a radial abgeschleuderten Niederschlag als Flüssigkeit zu sammeln. Diese Flüssigkeit steht dann als Wärmetauscherfluid zum Einspeisen in den sekundärseitigen Einlass 16d des Wärmetauschers 16 mittels einer Pumpe 42 zur Verfügung, wobei in die Senke 40 ein Ansaugstutzen 42a der Förderpumpe 42 ragt, um die Flüssigkeit zum sekundärseitigen Einlass 16d des Wärmetauschers 16 zu fördern.

Zur Kühlung der Kammerwände 30a' des Kondensationskühlers 30 wird das Kühlmedium mittels einer elektrischen Pumpe 44 an den Kammerwänden entlang durch den Kondensationskühler 30 gefördert. Die dabei aus dem Kondensationskühler 30 heraus geförderte thermische Energie dieses Kühlmediums wird der Primärseite 50a eines weiteren Wärmetauschers in Form eines Plattenwärmetauschers 50 zugeführt, dessen Sekundärseite 50b aus der Vorrichtung 10 herausgeführt ist. Hierzu ist eine weitere elektrischen Pumpe 52 im Innern der Ummantelung 10 vorgesehen, die den Volumenstrom der Sekundärseite 50b des Plattenwärmetauschers 50 fördert. Die Temperatur- und Druckverhältnisse im Innern der Vorrichtung 10 sind auch dadurch einzustellen, dass die Menge der aus dem Innern der Ummantelung 10 heraustransportierte thermische Energie (Abwärme) gesteuert oder geregelt wird. Dazu ist im Strömungsweg der Sekundärseite 50b des Plattenwärmetauschers 50 ein Stellventil 54 angeordnet. Das Stellventil 54 öffnet ab einem vorbestimmten Maximaldruck (zum Beispiel 2 - 5 bar) und/oder einer vorbestimmten Maximaltemperatur (110 - 130 °C) im Innern der Vorrichtung 10 den Strömungsweg der Sekundärseite 50b des Plattenwärmetauschers 50.

Der Betrieb der vorstehend beschriebenen Vorrichtung wird durch eine - nicht weiter veranschaulichte - elektronische Steuerung bewerkstelligt, die die Pumpen, die Ventile, die Motoren, etc. in Abhängigkeit von im Innern der Vorrichtung befindlichen (Temperatur-/ Druck-) Sensoren, sowie von Leistungsanforderungssignalen seitens der mit der Nutzleistung Pₐᵤₛ versorgten Verbraucher mit Steuerstrom beaufschlagt.

## Patentansprüche

1. Vorrichtung zur Gewinnung elektrischer Energie aus der Abgaswärme einer Verbrennungsmaschine (12) eines Kraftfahrzeuges, mit
- einem Wärmetauscher (16), der
-- primärseitig von Abgas der Verbrennungsmaschine (12) zu durchströmen ist, und der
-- sekundärseitig von Wärmetauscherfluid zu durchströmen ist, das im Betrieb der Verbrennungsmaschine (12) in dem Wärmetauscher (16) auf ein erstes, hohes Temperatur- und/oder Druckniveau zu bringen ist,
- wenigstens einer, einen Eintritt (20a) und einen Austritt (20b) aufweisenden Lavaldüse (20),
-- deren Eintritt (20a) mit einem sekundärseitigen Auslass (16c) des Wärmetauschers (16) unter Zwischenschaltung eines druck- und/oder temperaturabhängig schaltenden Steuerventils (18) zu verbinden ist, wobei unterhalb eines vorbestimmten ersten Druck- und/oder Temperaturniveau sich das Steuerventil (18) in seiner Schließstellung befindet,
-- deren Austritt (20b) auf wenigstens ein Schaufelrad (22a) einer Gleichdruckturbine (22) gerichtet ist, und
-- die so dimensioniert ist, dass sie die Gleichdruckturbine (22) mit Dampf beschickt, der ein niedrigeres, zweites Temperatur- und/oder Druckniveau als das erste, hohe Temperatur- und/oder Druckniveau, und eine hohe Strömungsgeschwindigkeit hat,
- einem elektrischen Generator (26), der
-- einen mit der Gleichdruckturbine (22) gekoppelten Rotor (26a), der von ihr in Rotation zu versetzen ist, und
-- einen Stator (26b) mit wenigstens einer Statorwicklung (26b') aufweist, an der elektrische Leistung (Pₐᵤₛ) abzunehmen ist, und
- einem Kondensationskühler (30), der dazu eingerichtet ist, Dampf, der an der Gleichdruckturbine (22) Arbeit verrichtet hat, zu verflüssigen, wobei aus diesem Dampf durch Kondensation gewonnene Flüssigkeit in einen sekundärseitigen Einlass (16d) des Wärmetauschers (16) einzuspeisen ist.

2. Vorrichtung zur Gewinnung elektrischer Energie nach Anspruch 1, **dadurch gekennzeichnet, dass** die Verbrennungsmaschine (12) des Kraftfahrzeuges eine interne Brennkraftmaschine (12), in Form einer Dieselmaschine, einer Otto-Maschine oder dergl. ist, wobei der Wärmetauscher (16) derart mit der Verbrennungsmaschine (12) des Kraftfahrzeuges zu verbinden und von dem Wärmetauscherfluid zu durchströmen ist, dass das Abgas der Verbrennungsmaschine (12) und das Wärmetauscherfluid den Wärmetauscher (16) im Gegenstrom passieren.

3. Vorrichtung zur Gewinnung elektrischer Energie nach Anspruch 2, **dadurch gekennzeichnet, dass** das druck- und/oder temperaturabhängig schaltende Steuerventil (18) bei Erreichen eines Temperaturniveau des Wärmetauscherfluids von etwa 450 °C bis etwa 700 °C bzw. eines Druckniveau von etwa 45 bar bis etwa 70 bar von seiner Schließstellung in seine Offenstellung wechselt.

4. Vorrichtung zur Gewinnung elektrischer Energie nach einem der Ansprüche 1 bis 3, **dadurch gekennzeichnet, dass** die Lavaldüse (20) einen im Wesentlichen kreisrunden Querschnitt hat, wobei der Austritt (20b) der Lavaldüse (20) einen Erweiterungswinkel (a) hat, der so gewählt ist, dass der austretende Dampf eine ablösungsfreie Strömung hat, wobei der Erweiterungswinkel (a) unter 20°, vorzugsweise unter etwa 10° liegt, und/oder wobei die Lavaldüse (20) so dimensioniert ist, dass der in ihren Eintritt (20a) eingespeiste Dampf am Austritt (20b) der Lavaldüse (20) überhitzter Dampf ist, und/oder wobei die Lavaldüse (20) zur Regelung der elektrischen Nutzleistung durch Verändern des Volumenstroms einen mit einer Stelleinrichtung (28) verstellbaren Düsenquerschnitt hat.

5. Vorrichtung zur Gewinnung elektrischer Energie nach einem der Ansprüche 1 bis 4, **dadurch gekennzeichnet, dass** die Gleichdruckturbine (22) ein Schaufelrad (22a) aufweist, das zur Erzeugung eines auf den Rotor (26a) des elektrischen Generator (26) wirkenden Drehmomentes dem Dampf Energie entzieht, wobei eine Druckdifferenz zwischen dem Eintritt (20a) der Lavaldüse (20) und einem Auslass (22c) der Gleichdruckturbine (22) praktisch ausschließlich in der lavaldüse (20) abzubauen ist während der Druck im Schaufelrad (22a) praktisch konstant bleibt, und/oder wobei die Gleichdruckturbine eine vorzugsweise tangential durchströmte Peltonturbine (22) ist.

6. Vorrichtung zur Gewinnung elektrischer Energie nach einem der Ansprüche 1 bis 5, **dadurch gekennzeichnet, dass** der Kondensationskühler (30) als in Rotation zu versetzender Körper ausgebildet ist, der in einem Raum (10a) angeordnet ist, in den der Dampf gelangt, nachdem dieser an der Gleichdruckturbine (22) Arbeit verrichtet hat, wobei der Kondensationskühler (30) durch einen Motor (32) in Rotation zu versetzen ist.

7. Vorrichtung zur Gewinnung elektrischer Energie nach dem vorhergehenden Anspruch, **dadurch gekennzeichnet, dass** der Kondensationskühler (30) mehrere miteinander in Strömungsverbindung stehende Kammern (30a) aufweist, deren Wände (30a') auf einer Seite von einem Kühlmedium zu kühlen sind, und auf der anderen Seite als Kondensationsfläche für den Dampf aus der Gleichdruckturbine (22) dienen, wobei die Kammern (30a) mit einer Drehzahl in Rotation zu versetzen sind, dass die Zentrifugalkraft an der Kondensationsfläche kondensierenden Niederschlag radial nach außen an den Rand der Kammern (30a) fördert und von dort radial abschleudert, und wobei eine Senke (40) vorgesehen ist, um vom Rand der Kammern (30a) radial abgeschleuderten Niederschlag als Flüssigkeit zu sammeln damit diese als Wärmetauscherfluid zum Einspeisen in den sekundärseitigen Einlass (16d) des Wärmetauschers (16) zur Verfügung steht, und/oder wobei zur Kühlung der Kammerwände (30a) des Kondensationskühlers (30) ein Kühlmedium an den Kammerwänden (30a') entlang zu fördern ist, wobei die thermische Energie dieses Kühlmediums über einen weiteren Wärmetauscher (50) aus der Vorrichtung herausgeführt wird, und/oder in die Senke (40) ein Ansaugstutzen (42b) einer Förderpumpe (42) ragt, um die Flüssigkeit zum sekundärseitigen Einlass (16c) des Wärmetauschers (16) zu fördern.

8. Vorrichtung zur Gewinnung elektrischer Energie nach einem der vorhergehenden Ansprüche, **dadurch gekennzeichnet, dass** eine elektronische Steuerung zum Betrieb der Komponenten der Vorrichtung vorgesehen ist, die die Pumpen, die Ventile, etc. in Abhängigkeit von im Innern der Vorrichtung befindlichen Sensoren mit Steuerstrom beaufschlagt.

9. Vorrichtung zur Gewinnung elektrischer Energie nach einem der vorhergehenden Ansprüche, **dadurch gekennzeichnet, dass** der elektrische Generator (26) eine Reluktanzmaschine oder eine permanenterregte Gleichstrommaschine, vorzugsweise mit elektronischer Kommutierung ist.

10. Vorrichtung zur Gewinnung elektrischer Energie nach einem der vorhergehenden Ansprüche, **dadurch gekennzeichnet, dass** die Vorrichtung in einer druck- und temperaturfesten Ummantelung (10) aufgenommen ist.

11. Verfahren zur Gewinnung elektrischer Energie aus der Abgaswärme einer Verbrennungsmaschine eines Kraftfahrzeuges, mit den Schritten:
- Bereitstellen eines Wärmetauschers,
- primärseitiges Einspeisen von Abgas des Verbrennungsmotors in den Wärmetauscher,
- sekundärseitiges Einspeisen von Wärmetauscherfluid in den Wärmetauscher um im Betrieb des Verbrennungsmotors das Wärmetauscherfluid in dem Wärmetauscher auf ein erstes, hohes Temperatur- und/oder Druckniveau zu bringen,
- Zuführen des auf dem ersten, hohen Temperatur- und/oder Druckniveau befindlichen Wärmetauscherfluid zu wenigstens einer Lavaldüse, die einen Eintritt für das Wärmetauscherfluid und einen Austritt hat, der auf Schaufelräder einer Gleichdruckturbine gerichtet ist,
-- wobei das Wärmetauscherfluid erst dann der Lavaldüse zugeführt wird, wenn sich das Wärmetauscherfluid oberhalb eines vorbestimmten ersten Druck- und/oder Temperaturniveau befindet
- wobei die Lavaldüse so dimensioniert ist, dass sie die Gleichdruckturbine mit Dampf beschickt, der ein niedrigeres, zweites Temperatur- und/oder Druckniveau als das erste, hohe Temperatur- und/oder Druckniveau, und eine hohe Strömungsgeschwindigkeit hat,
- um einen mit der Gleichdruckturbine gekoppelten Rotor eines elektrischen Generators in Rotation zu versetzen, und um von einem Stator mit wenigstens einer Statorwicklung des elektrischen Generators elektrische Leistung abzunehmen,
- Kondensieren des Dampfes, der an der Gleichdruckturbine Arbeit verrichtet hat mit einem Kondensationskühler, und
- sekundärseitiges Einspeisen der durch Kondensation dieses Dampfes gewonnenen Flüssigkeit in den Wärmetauscher als Wärmetauscherfluid.

12. Verfahren nach Anspruch 11, **dadurch gekennzeichnet, dass** als Verbrennungsmaschine des Kraftfahrzeuges eine interne Brennkraftmaschine in Form einer Dieselmaschine, einer Otto-Maschine oder dergl. verwendet wird, wobei das Abgas des Verbrennungsmotors und das Wärmetauscherfluid den Wärmetauscher im Gegenstrom passieren.

13. Verfahren nach dem vorhergehenden Anspruch, **dadurch gekennzeichnet, dass** der Eintritt der Lavaldüse erst dann mit dem sekundärseitigen Auslass des Wärmetauschers in Strömungsverbindung gesetzt wird, wenn das Wärmetauscherfluid ein Druckniveau von etwa 45 bar bis etwa 70 bar bzw. ein Temperaturniveau von etwa 450 °C bis etwa 700°C erreicht hat, wobei am Austritt der Lavaldüse Dampf mit einen im Wesentlichen ablösungsfreien Strömung bereitgestellt wird, und/oder wobei am Austritt der Lavaldüse überhitzter Dampf bereitgestellt wird, der vorzugsweise etwa 2 - 7 bar Druck, etwa 150 - 200 °C Temperatur und etwa 900 - 1300 m/s Stömungsgeschwindigkeit hat, und/oder wobei der von der Lavaldüse bereitgestellte Dampf die Gleichdruckturbine vorzugsweise tangential durchströmt, und/oder wobei zur Regelung einer von der Vorrichtung abgegebenen elektrischen Nutzleistung der Volumenstrom durch den Düsenquerschnitt der Lavaldüse mit einer Stelleinrichtung verstellt wird.

14. Verfahren nach einem der vorhergehenden Ansprüche, **dadurch gekennzeichnet, dass** der Dampf, nachdem dieser an der Gleichdruckturbine Arbeit verrichtet hat, an dem Kondensationskühler als Flüssigkeit niederschläge wobei der Kondensationskühler mit einer Drehzahl in Rotation versetzt wird, dass die dabei auftretende Zentrifugalkraft an dem Kondensationskühler kondensierenden Niederschlag radial nach außen an den Rand des Kondensationskühlers fördert und von dort radial abschleudert, und/oder wobei in dem Kondensationskühler Wände mehrerer miteinander in Strömungsverbindung stehender Kammern auf einer Seite von einem Kühlmedium gekühlt werden, und auf der anderen Seite als Kondensationsfläche für den Dampf aus der Gleichdruckturbine dienen, und/oder wobei in einer Senke vom Rand der Kammern des Kondensationskühlers radial abgeschleuderter Niederschlag als Flüssigkeit gesammelt wird damit diese als Wärmetauscherfluid zum Einspeisen in den sekundärseitigen Einlass des Wärmetauschers zur Verfügung steht, und/oder wobei die Kammerwände des Kondensationskühlers mit einem Kühlmedium unter den Taupunkt des aus der Gleichdruckturbine austretenden Dampfes gekühlt werden und die thermische Energie dieses Kühlmediums über einen weiteren Wärmetauscher aus der Vorrichtung herausgeführt wird, und/oder wobei aus der Senke mittels einer Förderpumpe die Flüssigkeit als Wärmetauscherfluid zum sekundärseitigen Einlass des Wärmetauschers gefördert wird, und/oder wobei zur Erzeugung elektrischer Energie als elektrischer Generator eine Reluktanzmaschine oder eine permanenterregte Gleichstrommaschine, vorzugsweise mit elektronischer Kommutierung verwendet wird.

## Claims

1. A device for recovering electric energy from the exhaust heat of a combustion engine (12) of a motor vehicle, comprising
- a heat exchanger (16) through which the exhaust gas of the internal combustion engine (12) is to flow on the primary side, and
-- through which heat exchanger fluid which, during operation of the combustion engine (12), is to be brought to a first high temperature and/or pressure level in the heat exchanger (16) is to flow on the secondary side,
- at least one Laval nozzle (20) which comprises an inlet (20a) and an outlet (20b),
-- whose inlet (20a) is to be connected with a secondary outlet (16c) of the heat exchanger (16), with a control valve (18) connected between them, which switches depending on pressure and/or temperature, with the control valve (18) being in its closed position below a predetermined first pressure and/or temperature level,
-- whose outlet (20b) is directed onto at least one turbine blade wheel (22a) of a constant-pressure turbine (22), and
-- which is dimensioned so that it supplies the constant-pressure turbine (22) with steam with a second temperature and/or pressure level which is lower than the first high temperature and/or pressure level and which has a high flow velocity,
- an electric generator (26), which comprises
-- a rotor (26a) which is coupled to the constant-pressure turbine (22) to be rotated by it, and
-- a stator (26b) with at least one stator winding (26b') from which electrical power (Pₐᵤₛ) is to be taken, and
- a condensation cooler (30) which is adapted to liquefy steam after having performed work at the constant-pressure turbine (22), with the liquid which is obtained from this steam by condensation to be fed into a secondary inlet (16d) of the heat exchanger (16).

2. The device for recovering electric energy according to Claim 1, **characterised in that** the combustion engine (12) of the motor vehicle is an internal combustion engine (12) in the form of a Diesel engine, a petrol engine or the like, wherein the heat exchanger (16) is to be connected with the combustion engine (12) of the motor vehicle and to be passed by the heat exchanger fluid in such a manner that the exhaust gas of the combustion engine (12) and the heat exchanger fluid pass the heat exchanger (16) in counter-flow.

3. The device for recovering electric energy according to Claim 2, **characterised in that** the pressure and/or temperature-dependent switching control valve (18) changes from its closed position into its open position upon reaching a temperature level of the heat exchanger fluid of approx. 450 °C to approx. 700 °C or a pressure level, respectively, of approx. 45 bar to approx. 70 bar.

4. The device for recovering electric energy according to one of Claims 1 to 3, **characterised in that** the Laval nozzle (20) has an essentially circular cross-section, with the outlet (20b) of the Laval nozzle (20) having an expansion angle (a) which is selected so that the exiting steam has a non-separated flow, with the expansion angle (a) being smaller than 20°, preferably smaller than approx. 10°, and/or with the Laval nozzle (20) being dimensioned such that the steam which is fed into its inlet (20a) is superheated steam at the outlet (20b) of the Laval nozzle (20), and/or with the Laval nozzle (20) having a variable nozzle cross-section which may be adjusted by an actuator (28) for regulating the electric effective power by changing the volume flow rate.

5. The device for recovering electric energy according to one of Claims 1 to 4, **characterised in that** the constant-pressure turbine (22) comprises an turbine blade wheel (22a) which withdraws energy from the steam for generating a torque which acts on the rotor (26a) of the electric generator (26), with a pressure difference between the inlet (20a) of the Laval nozzle (20) and an outlet (22c) of the constant-pressure turbine (22) to be virtually exclusively relieved in the Laval nozzle (20), while the pressure in the turbine blade wheel remains (22a) virtually constant.

6. The device for recovering electric energy according to one of Claims 1 to 5, **characterised in that** the condensation cooler (30) is formed as a body to be rotated, which is arranged in a space (10a) into which the steam enters after having performed work at the constant-pressure turbine (22), with the condensation cooler (30) to be rotated by a motor (32).

7. The device for recovering electric energy according to the previous claim, **characterised in that** the condensation cooler (30) comprises several chambers (30a) being in a flow connection with each other, the walls (30a") of which are to be cooled by a cooling medium on one side and, on the other side, serving as a condensation surface for the steam from the constant-pressure turbine (22), wherein the chambers (30a) are to be rotated at a speed so that the centrifugal force conveys condensing precipitation at the condensation surface radially outwards to the edges of the chambers (30a), from where it is radially thrown off, and wherein a depression (40) is provided for collecting radially thrown off precipitation from the edges of the chambers (30a) as liquid so that it is available as heat exchanger fluid for feeding into the secondary inlet (16d) of the heat exchangers (16), and/or wherein a cooling medium is to be conveyed along the chamber walls (30a') for cooling of the chamber walls (30a') of the condensation cooler (30), with the thermal energy of said cooling medium being conducted out of the device via a further heat exchanger (50), and/or a suction pipe (42b) of a feed pump (42) extends into the depression (40) in order to convey the liquid to the secondary inlet (16c) of the heat exchanger (16).

8. The device for recovering electric energy according to one of the previous claims, **characterised in that** a electronic controller is provided for operating the components of the device, which supplies a control current to the pumps, the valves etc., depending on sensors which are located within the device.

9. The device for recovering electric energy according to one of the previous claims, **characterised in that** the electric generator (26) is a reluctance machine or a permanent magnet direct current machine, preferably with electronic commutation.

10. The device for recovering electric energy according to one of the previous claims, **characterised in that** the device is accommodated in the pressure-resistant and temperature-resistant jacket (10).

11. A method for recovering electric energy from the exhaust heat of a combustion engine (12) of a motor vehicle, comprising the steps:
- providing a heat exchanger,
- primary feeding of exhaust gas of the combustion engine into the heat exchanger,
- secondary feeding of heat exchanger fluid into the heat exchanger in order to bring the heat exchanger fluid in the heat exchanger to a first high temperature and/or pressure level during operation of the combustion engine,
- feeding the heat exchanger fluid at the first high temperature and/or pressure level to at least one Laval nozzle which has an inlet for the heat exchanger fluid and an outlet which is directed onto turbine blade wheels of a constant-pressure turbine,
-- wherein the heat exchanger fluid is supplied to the Laval nozzle only after the heat exchanger fluid is above a predetermined first pressure and/or temperature level,
- wherein the Laval nozzle is dimensioned so that it supplies the constant-pressure turbine with steam with a second temperature and/or pressure level which is lower than the first high temperature and/or pressure level and which has a high flow velocity,
- in order to rotate a rotor of the electric generator, which is coupled to the constant-pressure turbine, and in order to take electrical power from a stator with at least one stator winding,
- condensing the steam which has performed work at the constant-pressure turbine by means of a condensation cooler, and
- secondary feeding of the liquid obtained by condensation of said steam into the heat exchanger as heat exchanger fluid.

12. The method according to Claim 11, **characterised in that** as combustion engine of the motor vehicle an internal combustion engine in the form of a Diesel engine, a petrol engine or the like is used, wherein the exhaust gas of the combustion engine and the heat exchanger fluid pass through the heat exchanger in counter-flow.

13. The method according to the previous claim, **characterised in that** the inlet of the Laval nozzle is brought into flow connection with the secondary outlet of the heat exchanger only after the heat exchanger fluid has reached a temperature level of approx. 450 °C to approx. 700 °C or a pressure level of approx. 45 bar to approx. 70 bar, wherein steam with an essentially non-separated flow is provided at the outlet of the Laval nozzle, and/or wherein superheated steam is provided at the outlet of the Laval nozzle, which preferably has a pressure of approx. 2 to 7 bar, a temperature of approx. 150 to 200 °C and a flow velocity of approx. 900 to 1300 m/sec, and wherein the steam provided by the Laval nozzle preferably flow tangentially through the constant-pressure turbine, and/or wherein the volume flow rate is adjusted by an actuator for varying the nozzle cross-section of the Laval nozzle in order to regulate the effective electrical output power of the device.

14. The method according to one of the previous claims, **characterised in that** the steam after having performed work at the constant-pressure turbine precipitates as liquid at the condensation cooler, with the condensation cooler being brought to rotate at a speed so that the centrifugal force conveys condensing precipitation at the condensation cooler radially outwards to the edge of the condensation cooler, to be radially thrown off from there, and/or wherein walls of several chambers being in flow connection with each other in the condensation cooler are cooled on one side by a cooling medium and on the other side serve a condensation surface for the steam from the constant-pressure turbine, and/or wherein radially thrown off precipitation from the edges of the chambers of the condensation cooler is collected as liquid in a depression, so that it is available as heat exchanger fluid for feeding into the secondary inlet of the heat exchangers, and/or wherein the chamber walls of the condensation cooler are cooled by a cooling medium below the dew point of the steam exiting from the constant-pressure turbine, and the thermal energy of said cooling medium is conducted out of the device via a further heat exchanger, and/or wherein the liquid as heat exchanger fluid is conveyed from the depression by means of a feed pump to the secondary inlet of the heat exchanger, and/or wherein a reluctance machine or a permanent magnet direct current machine, preferably with electronic commutation, is used as an electric generator for the generation of electric energy.

## Revendications

1. Dispositif de production d'énergie électrique à partir de la chaleur des gaz d'échappement d'un moteur thermique à combustion (12) d'un véhicule à moteur, comprenant :
- un échangeur de chaleur (16) qui,
-- côté primaire, doit être traversé par l'écoulement de gaz d'échappement du moteur thermique à combustion (12), et qui,
-- côté secondaire, doit être traversé par l'écoulement de fluide d'échangeur de chaleur qui, lorsque le moteur thermique à combustion (12) est en fonctionnement, doit être amené, dans l'échangeur de chaleur (16), à un premier niveau élevé de température et/ou de pression,
- au moins une tuyère de Laval (20) qui présente une entrée (20a) et une sortie (20b),
-- dont l'entrée (20a) est à relier à une sortie (16c) du côté secondaire de l'échangeur de chaleur (16), avec interposition d'une vanne de commande (18) commutant en fonction de la pression et/ou de la température, la vanne de commande (18) se trouvant dans sa position fermée en-dessous d'un premier niveau prédéterminé de pression et/ou de température,
-- dont la sortie (20b) est dirigée sur au moins une roue à aubes (22a) d'une turbine à action (22), et
-- qui est dimensionnée de façon à alimenter la turbine à action (22) avec de la vapeur possédant un deuxième niveau de température et/ou de pression plus bas que le premier niveau élevé de température et/ou de pression, ainsi qu'une vitesse d'écoulement élevée,
- un générateur électrique (26) comportant
-- un rotor (26a) couplé à la turbine à action (22) et destiné à être mis en rotation par celle-ci, et
-- un stator (26b) avec au moins un enroulement de stator (26b') duquel doit être prélevée une puissance électrique (Pₐᵤₛ), et
- un refroidisseur à condensation (30) conçu pour liquéfier de la vapeur qui a fourni du travail dans la turbine à action (22), le liquide obtenu par condensation à partir de cette vapeur, étant à envoyer dans une entrée (16d) du côté secondaire de l'échangeur de chaleur (16).

2. Dispositif de production d'énergie électrique, selon la revendication 1, **caractérisé en ce que** le moteur thermique à combustion (12) du véhicule à moteur est un moteur à combustion interne (12) se présentant sous la forme d'un moteur Diesel, d'un moteur à allumage par étincelles ou autre moteur similaire, l'échangeur de chaleur (16) devant être relié au moteur thermique à combustion (12) du véhicule à moteur et devant être traversé par l'écoulement du fluide d'échangeur de chaleur de telle manière que les gaz d'échappement du moteur thermique à combustion (12) et le fluide d'échangeur de chaleur traversent l'échangeur de chaleur (16) à contre-courant.

3. Dispositif de production d'énergie électrique, selon la revendication 2, **caractérisé en ce que** la vanne de commande (18) commutant en fonction de la pression et/ou de la température, commute de sa position fermée dans la position ouverte, lorsque l'on atteint un niveau de température du fluide d'échangeur de chaleur d'environ 450 °C à environ 700 °C, respectivement un niveau de pression d'environ 45 bar à environ 70 bar.

4. Dispositif de production d'énergie électrique, selon l'une des revendications 1 à 3, **caractérisé en ce que** la tuyère de Laval (20) présente une section transversale sensiblement circulaire, **en ce que** la sortie (20b) de la tuyère de Laval (20) possède un angle d'évasement (a) choisi de façon à ce que la vapeur qui s'échappe, présente un écoulement sans décollement, **en ce que** l'angle d'évasement (a) est inférieur à 20°, de préférence inférieur à environ 10°, et/ou **en ce que** la tuyère de Laval (20) est dimensionnée de façon à ce que la vapeur envoyée dans son entrée (20a) soit de la vapeur surchauffée au niveau de la sortie (20b) de la tuyère de Laval (20), et/ou en ce que la tuyère de Laval (20), en vue de réguler la puissance électrique utile par variation du débit volumique, présente une section transversale de tuyère réglable à l'aide d'un système de réglage (28).

5. Dispositif de production d'énergie électrique, selon l'une des revendications 1 à 4, **caractérisé en ce que** la turbine à action (22) présente une roue à aubes (22a) qui soutire de l'énergie à la vapeur en vue d'engendrer un couple agissant sur le rotor (26a) du générateur électrique (26), **en ce qu'**une différence de pression entre l'entrée (20a) de la tuyère de Laval (20) et une sortie (22c) de la turbine à action (22) doit être dégradée pratiquement exclusivement dans la tuyère de Laval (20) tandis que la pression dans la roue à aubes (22a) reste pratiquement constante, et/ou **en ce que** la turbine à action est une turbine Pelton (22) traversée de préférence par un écoulement tangentiel.

6. Dispositif de production d'énergie électrique, selon l'une des revendications 1 à 5, **caractérisé en ce que** le refroidisseur à condensation (30) est réalisé sous la forme d'un corps à mettre en rotation, qui est agencé dans une chambre (10a) dans laquelle parvient la vapeur après avoir fourni du travail dans la turbine à action (22), le refroidisseur à condensation (30) étant à mettre en rotation au moyen d'un moteur (32).

7. Dispositif de production d'énergie électrique, selon la revendication précédente, **caractérisé en ce que** le refroidisseur à condensation (30) présente plusieurs compartiments (30a) reliés les uns aux autres sur le plan de l'écoulement des fluides, dont les parois (30a') doivent, sur un côté, être refroidies par un fluide de refroidissement, et servent, de l'autre côté, de surface de condensation pour la vapeur en provenance de la turbine à action (22), **en ce que** les compartiments (30a) doivent être mis en rotation avec une vitesse de rotation telle que la force centrifuge transporte le condensat condensant sur la surface de condensation radialement vers l'extérieur jusqu'au bord des compartiments (30a) et l'éjecte de là radialement, et **en ce qu'**il est prévu un collecteur (40), en vue de collecter le condensat éjecté radialement du bord des compartiments (30a), sous forme de liquide, afin de disposer de celui-ci en tant que fluide d'échangeur de chaleur destiné à être envoyé dans l'entrée (16d) du côté secondaire de l'échangeur de chaleur (16), et/ou **en ce que** pour refroidir les parois de compartiment (30a') du refroidisseur à condensation (30) un fluide de refroidissement est à faire circuler le long des parois de compartiment (30a'), l'énergie thermique de ce fluide de refroidissement étant évacuée hors du dispositif par l'intermédiaire d'un autre échangeur de chaleur (50), et/ou **en ce qu'**un embout d'aspiration (42b) d'une pompe de refoulement (42) s'engage dans le collecteur (40) en vue de refouler le liquide vers l'entrée (16c) du côté secondaire de l'échangeur de chaleur (16).

8. Dispositif de production d'énergie électrique, selon l'une des revendications précédentes, **caractérisé en ce qu'**il est prévu une commande électronique destinée à faire fonctionner les composants du dispositif, et qui alimente en courant de commande, les pompes, les vannes, etc., en fonction de détecteurs se trouvant à l'intérieur du dispositif.

9. Dispositif de production d'énergie électrique, selon l'une des revendications précédentes, **caractérisé en ce que** le générateur électrique (26) est une machine à reluctance ou une machine à courant continu à excitation permanente, de préférence à commutation électronique.

10. Dispositif de production d'énergie électrique, selon l'une des revendications précédentes, **caractérisé en ce que** le dispositif est logé dans une enveloppe de capotage (10) résistant à la pression et à la température.

11. Procédé de production d'énergie électrique à partir de la chaleur des gaz d'échappement d'un moteur thermique à combustion d'un véhicule à moteur, comprenant les étapes suivantes :
- mettre à disposition un échangeur de chaleur,
- alimenter le côté primaire de l'échangeur de chaleur en gaz d'échappement du moteur thermique à combustion,
- alimenter le côté secondaire de l'échangeur de chaleur en fluide d'échangeur de chaleur, en vue d'amener, lors du fonctionnement du moteur thermique à combustion, le fluide d'échangeur de chaleur dans l'échangeur de chaleur, à un premier niveau élevé de température et/ou de pression,
- amener le fluide d'échangeur de chaleur se trouvant au premier niveau élevé de température et/ou de pression, à au moins une tuyère de Laval possédant une entrée pour le fluide d'échangeur de chaleur et une sortie dirigée sur des roues à aubes d'une turbine à action,
-- le fluide d'échangeur de chaleur n'étant amené à la tuyère de Laval que lorsque ce fluide d'échangeur de chaleur se trouve au-dessus d'un premier niveau prédéterminé de pression et/ou de température,
-- la tuyère de Laval étant dimensionnée de façon à alimenter la turbine à action avec de la vapeur possédant un deuxième niveau de température et/ou de pression plus bas que le premier niveau élevé de température et/ou de pression, ainsi qu'une vitesse d'écoulement élevée,
-- en vue de mettre en rotation un rotor d'un générateur électrique, couplé à la turbine à action, et en vue de prélever de la puissance électrique d'un stator avec au moins un enroulement de stator du générateur électrique,
- condenser la vapeur qui a fourni du travail dans la turbine à action, à l'aide d'un refroidisseur à condensation, et
- alimenter le côté secondaire de l'échangeur de chaleur avec le liquide obtenu par condensation de cette vapeur, en tant que fluide d'échangeur de chaleur.

12. Procédé selon la revendication 11, **caractérisé en ce que** l'on utilise en guise de moteur thermique à combustion du véhicule à moteur, un moteur à combustion interne se présentant sous la forme d'un moteur Diesel, d'un moteur à allumage par étincelles ou autre moteur similaire, les gaz d'échappement du moteur thermique à combustion et le fluide d'échangeur de chaleur traversant l'échangeur de chaleur à contre-courant.

13. Procédé selon la revendication précédente, **caractérisé en ce que** l'entrée de la tuyère de Laval n'est reliée à la sortie du côté secondaire de l'échangeur de chaleur sur le plan de l'écoulement des fluides que lorsque le fluide d'échangeur de chaleur a atteint un niveau de température du fluide d'échangeur de chaleur d'environ 450 °C à environ 700 °C, respectivement un niveau de pression d'environ 45 bar à environ 70 bar, **en ce qu'**à la sortie de la tuyère de Laval de la vapeur est fournie avec un écoulement sensiblement libre de décollement, et/ou **en ce qu'**à la sortie de la tuyère de Laval de la vapeur surchauffée est fournie possédant de préférence une pression d'environ 2-7 bar, une température d'environ 150-200 °C et une vitesse d'écoulement d'environ 900-1300 m/s, et/ou **en ce que** la vapeur fournie par la tuyère de Laval s'écoule de préférence tangentiellement à travers la turbine à action, et/ou **en ce que** pour réguler une puissance électrique utile délivrée par le dispositif, le débit volumique à travers la section transversale de tuyère de la tuyère de Laval est réglé à l'aide d'un système de réglage.

14. Procédé selon l'une des revendications précédentes, **caractérisé en ce que** la vapeur, après avoir fourni du travail dans la turbine à action, condense sous forme de liquide dans le refroidisseur à condensation, **en ce que** le refroidisseur à condensation est mis en rotation avec une vitesse de rotation telle, que la force centrifuge apparaissant à cette occasion transporte le condensat condensant dans le refroidisseur à condensation radialement vers l'extérieur jusqu'au bord du refroidisseur à condensation, et l'éjecte de là radialement, et/ou **en ce que** des parois de plusieurs compartiments reliés les uns aux autres sur le plan de l'écoulement des fluides sont refroidies dans le refroidisseur à condensation, sur un côté, par un agent de refroidissement, et servent, de l'autre côté, de surface de condensation pour la vapeur en provenance de la turbine à action, et/ou **en ce que** du condensat éjecté radialement du bord des compartiments du refroidisseur à condensation est collecté dans un collecteur sous forme de liquide pour disposer de celui-ci en tant que fluide d'échangeur de chaleur, en vue de l'envoyer dans l'entrée du côté secondaire de l'échangeur de chaleur, et/ou **en ce que** les parois de compartiment du refroidisseur à condensation sont refroidies avec un agent de refroidissement, en-dessous du point de rosée de la vapeur s'échappant de la turbine à action, et l'énergie thermique de cet agent de refroidissement est évacuée hors du dispositif par l'intermédiaire d'un autre échangeur de chaleur, et/ou **en ce que** le liquide est refoulé à partir du collecteur, en tant que fluide d'échangeur de chaleur, dans l'entrée du côté secondaire de l'échangeur de chaleur, au moyen d'une pompe de refoulement, et/ou **en ce que** pour produire l'énergie électrique on utilise en guise de générateur électrique, une machine à reluctance ou une machine à courant continu à excitation permanente, de préférence avec une commutation électronique.
